# EUROPÄISCHE PATENTSCHRIFT

(11) **EP 1 827 915 B1**
(45) Veröffentlichungstag und Bekanntmachung des Hinweises auf die Patenterteilung: **01.10.2008**
(21) Anmeldenummer: 05796958.6
(22) Anmeldetag: 07.10.2005
(51) Int. Cl.: B60R 21/017

(54) **STEUERGERÄT ZUR ANSTEUERUNG VON PERSONENSCHUTZMITTELN**
CONTROL DEVICE FOR TRIGGERING PERSON-PROTECTING MEANS
APPAREIL DE COMMANDE POUR COMMANDER DES MOYENS DE PROTECTION DE PERSONNES

(30) Priorität: 15.12.2004 DE 102004060296
(43) Veröffentlichungstag der Anmeldung: 05.09.2007
(73) Patentinhaber: ROBERT BOSCH GMBH, 70442 Stuttgart (DE)
(72) Erfinder: SCHUMACHER, Hartmut, 71691 Freiberg (DE)
(86) Internationale Anmeldenummer: PCT/EP2005/055083
(87) Internationale Veröffentlichungsnummer: WO 2006/063878

(56) Entgegenhaltungen:
- DE-A1- 19 542 085
- DE-A1- 19 807 750
- US-A- 5 216 284
- US-A- 5 825 098

## Beschreibung

### Stand der Technik

Die Erfindung geht aus von einem Steuergerät zur Ansteuerung von Personenschutzmitteln nach der Gattung des unabhängigen Patentanspruchs.

Aus US 5,825,098 ist es bekannt, durch einen Leistungswandler, beispielsweise ein Gleichspannungswandler die Energiereserve, eines Airbagsteuergeräts aufzuladen und Versorgungsspannungen bereitzustellen.

Aus US 5,216,284 ist es bekannt, die Batteriespannung und eine Überladung der Energiereserve zu überwachen.

### Vorteile der Erfindung

Das erfindungsgemäße Steuergerät zur Ansteuerung von Personenschutzmitteln mit den Merkmalen des unabhängigen Patentanspruchs hat den Vorteil, dass durch die Bereitstellung eines weiteren Halbleiterbausteins neben einem ersten Halbleiterbaustein in den bereits verschiedene Grundfunktionen des Steuergeräts integriert sind, sodass das Steuergerät bei einem gegebenen Funktionsumfang alleine funktionieren kann, die Wärmebelastung beim ersten Halbleiterbaustein reduziert wird. Beide, sowohl der erste als auch der zweite Halbleiterbaustein sind jeweils auf einem Halbleiterträger, also auf einem jeweiligen Siliziumsubstrat, realisiert. Die Anzahl der Funktionen, die auf einem solchen Halbleiterbaustein realisiert werden kann, ist bspw. durch die zulässige thermische Grenze des Halbleiterträgers begrenzt. Sollen jedoch mehr Funktionen integriert werden, dann ist ein zweiter Halbleiterträger bspw. von Vorteil. Dieser zweite Halbleiterbaustein ist vorteilhafterweise günstig und mit geringerem Aufwand ausgeführt. Um die thermische Belastung des ersten Halbleiterbausteins zu reduzieren wird hier vorgeschlagen, die Aufladung der Energiereserve nicht nur durch den ersten Halbleiterbaustein durchführen zu lassen, sondern auch den zweiten Halbleiterbaustein vorzusehen. Die Reduktion der Verluste, die in der Aufladeschaltung des ersten Halbleiterbausteins entstehen, und zwar aufgrund des endlichen Innenwiderstandes des Halbleiterbausteins im Aufwärtswandelbetrieb werden durch die Parallelschaltung mit dem Innenwiderstand des zweiten Halbleiterbausteins deutlich reduziert. Der Gesamtwiderstand einer Parallelschaltung ist niedriger als der Widerstand eines einzelnen Bausteins. Damit kommt es auch zu einer Reduzierung der Trägertemperatur und somit zu einer Erhöhung der Versorgungsmöglichkeiten, die der erste Halbleiterbaustein ausführen kann. Dies ist insbesondere notwendig, um die Schaltungsblöcke im zweiten Halbleiterbaustein zu versorgen, sowie die Erhöhung der Leistung des Microcontrollers im Steuergerät zu ermöglichen. Die Leistungserhöhung drückt sich in einer höheren Geschwindigkeit und einem erhöhten Speicher aus.

Durch die in den abhängigen Ansprüchen aufgeführten Maßnahmen und Weiterbildungen sind vorteilhafte Verbesserungen des im unabhängigen Patentanspruch angegebenen Steuergeräts möglich.

Besonders vorteilhaft ist, dass der erste und der zweite Halbleiterbaustein zur Aufladung der Energiereserve auf das Spannungsniveau der Fahrzeugbatterie konfiguriert sind. Damit ist dann eine erste Stufe der Aufladung der Energiereserve erreicht, die üblicherweise in dem Bereich von 20 bis 50 Volt aufgeladen wird, also auf eine überhöhte Spannung im Vergleich zur Fahrzeugbatteriespannung.

Weiterhin ist es vorteilhaft, dass im ersten Halbleiterbaustein ein Spannungsabwärtskonverter zur Bereitstellung einer ersten Versorgungsspannung vorgesehen ist, wobei mit dieser ersten Versorgungsspannung an das Steuergerät angeschlossene Sensoren wie Beschleunigungs-, Temperatur- und Drucksensoren versorgt werden. Der zweite Halbleiterbaustein leitet jedoch diese erste Versorgungsspannung aus dem Spannungsniveau der Fahrzeugbatterie ab und versorgt damit ebenfalls an das Steuergerät anschließbare Sensoren.

Vorteilhafterweise weist der zweite Halbleiterbaustein eine Schaltung zur Ausfallerkennung der Fahrzeugbatterie auf. Durch diese signalisiert der zweite Halbleiterbaustein dem ersten Halbleiterbaustein, die Aufladung der Energiereserve zu unterbrechen und den oder die Sensoren, die bisher aus der Batteriespannung über den zweiten Halbleiterbaustein versorgt wurden, ebenso wie die anderen Sensoren durch Energieentnahme aus der Energiereserve mittels des Abwärtswandlers im ersten Halbleiterbaustein zu versorgen.

Zur Aufladung der Energiereserve ist der erste Halbleiterbaustein derart konfiguriert, dass er die Energiereserve auf eine überhöhte Spannung im Vergleich zur Fahrzeugbatteriespannung auflädt. Bei Ausfall, insbesondere bei zu geringer Spannung (UBAT<6V) der Fahrzeugbatterie oder des Bordnetzes (Autarkie, Unterversorgung), wird der im ersten Halbleiterbaustein vorhandene Aufwärtswandler gesperrt. Zusätzlich werden die Precharger in allen Baustein gesperrt, d.h. es wird kein Strom mehr aus der Batteriespannung zum Laden der Energiereserve entnommen. Damit wird im ersten Halbleiterbaustein die Verlustleistung, die durch den Ladeprozess der Enerigereserve im Unterversorgungsfall entsteht, beseitigt. Die eingesparte Verlustleistung im Unterversorgungs- und Autarkiefall wird dem Abwärtswandler zur Erzeugung einer ersten Versorgungsspannung zur Verfügung gestellt, um die zusätzliche Versorgung der Sensoren durch den zweiten Halbleiterbaustein ebenfalls aus der ersten Versorgungsspannung zu ermöglichen, ohne die maximale Gesamtverlustleistung des ersten Halbleiterbauelements zu überschreiten.

Der erste und der zweite Halbleiterbaustein weisen jeweils einen Schaltkreis zur Anbindung der externen Sensoren, Schaltkreise zur Erfassung von Schalterstellungen, Hallsensorsignalen, zur Zündung und Überprüfung von Zündkreisen und zur Kommunikation mit Datenleitungen auf. Unter den Datenleitungen werden bspw. Bussystem wie LIN, CAN und der so genannte Serial Peripheral Interface Bus (SPI) verstanden.

### Zeichnung

Ein Ausführungsbeispiel der Erfindung ist in der Zeichnung dargestellt und wird in der nachfolgenden Beschreibung näher erläutert.

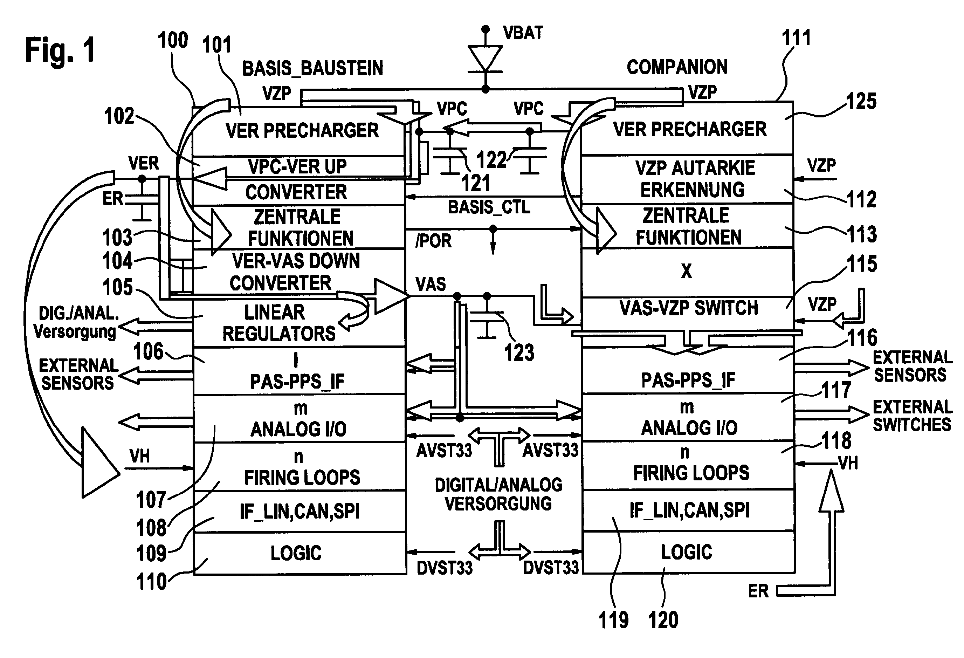

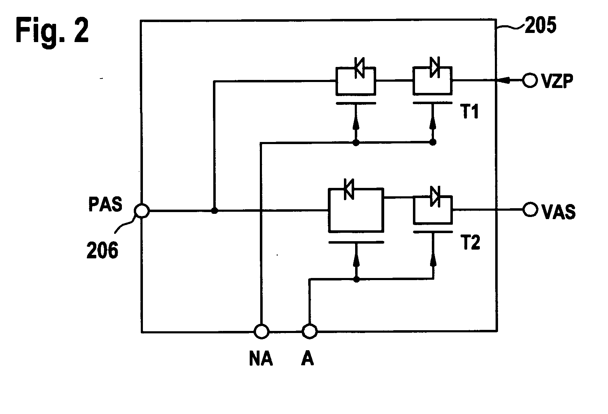

Es zeigt
Figur 1 ein Blockschaltbild des ersten und zweiten Halbleiterbausteins im Steuergerät und Figur 2 ein Blockschaltbild eines Funktionsblocks.

### Beschreibung

Steuergeräte zur Ansteuerung von Personenschutzmitteln wie Airbags, Gurtstraffcr oder Überrollbügel oder auch Fußgängerschutzsysteme weisen verschiedene integrierte Schaltkreise auf, wobei solche integrierten Schaltkreise auch auf einem Halbleiterträger, also einem Halbleitersubstrat, hergestellt werden können. Solche Halbieiterbausteine werden für verschiedene Funktionen verwendet. In solche Halbleiterbausteine werden bspw. Schnittstellenfunktionen, die Ansteuerungen der Zündkreise und die Spannungsversorgung des Steuergeräts integriert. Die Wärmeentwicklung auf einem Halbleitersubstrat ist dabei ein wichtiger Parameter, der die Anzahl der Funktionen, die auf einem Halbleitersubstrat integriert werden können, begrenzt.

Es wird vorgeschlagen, wenigstens einen zweiten Halbleiterbaustein neben einem ersten Halbleiterbaustein vorzusehen, um die Wärmeentwicklung auf dem ersten Halbleiterbaustein zu begrenzen. Hier wird vorgeschlagen, auch den zweiten Halbleiterbaustein bei der Aufladung der Energiereserve zu beteiligen. Darüber hinaus soll der zweite Halbleiterbaustein auch einen Teil der an das Steuergerät extern angeschlossenen Sensoren mit Strom zu versorgen. Um den zweiten Halbleiterbaustein so einfach wie möglich zu halten, leitet dieser zweite Halbleiterbaustein die Versorgungsspannung für die Sensoren aus der Spannung der Fahrzeugbatterie ab. Dafür wird bspw. eine einfache Spannungsbegrenzungsschaltung verwendet. Der erste Halbleiterbaustein weist auf einem Halbleiterträger eine Versorgungseinheit, Endstufen für Zündkreise, Schnittstellen zu externen Sensoren, analoge Ein- und Ausgänge, bspw. Schalterabfragen und Lampentreiber sowie Empfänger- und Senderbausteine für die Datenkommunikation, bspw. über LIN, CAN oder SPI auf. Wie oben dargestellt ist der begrenzende Faktor die thermische Grenze des Halbleiterträgers. Sollen weitere Funktionen in einem solchen Halbleiterbaustein für ein Airbagsteuergerät bereitgestellt werden, wird ein zweiter Halbleiterbaustein vorgeschlagen, der diese weitem Funktionen übernimmt. Beim so genannten Autarkiefall, also einem solchen Fall, in dem die Fahrzeugbatteriespannung abreißt, wird die für das Steuergerät notwendige Energie aus der Energiereserve entnommen. Durch die Energie aus der Energiereserve soll das Steuergerät für eine vorbestimmte Zeit voll funktionsfähig bleiben. Der zweite Halbleiterbaustein kann ohne eigene Schalt- und Linearregler aufgebaut werden.

Figur 1 zeigt in einem Blockschaltbild den ersten und zweiten Halbleiterbaustein 100, 111 in einem Steuergerät zur Ansteuerung von Personenschutzmitteln. Über die Spannung V_{bat} wird die Fahrzeugbatteriespannung von den beiden Bausteinen 100 und 111 über die Leitungen 1b und 1c als die Spannung V_{zp} aufgenommen. Der Baustein 101 im ersten Halbleiterbaustein bzw. 111 im zweiten Halbleiterbaustein dient zu einem ersten Laden der Energiereserve eR, die direkt an den Baustein 102 angeschlossen ist. In einer spätem Stufe wird dann durch einen Spannungsaufwärtskonverter aus dem Block 102 die Energiereserve eR weiter auf den überhöhten Spannungswert von bspw. 20 bis 40 Volt aufgeladen werden. Die Blöcke 103 und 113 zentrale Funktionen enthalten Schaltungsteile, die für mehrere IC-Funktionsblöcke benötigt werden, z.B. Spannungsreferenz (Bandgap), Stromreferenz, Taktgenerator, Power-On-Reset-Generator, Spannungsüberwachung, Temperaturüberwachung. Der Block 104 wird als Abwärtskonverter für die Batteriespannung verwendet, um mit der Spannung vₐₛ über dem Baustein 115 des zweiten Halbleiterbausteins die externen Sensoren im Unterversorgungsfall UBAT<6V bzw. Autarkiefall versorgen zu können.

Der Funktionsbaustein 115 versorgt die Schnittstellen 116 mit Energie. Im Normalfall wird diese aus VZP und damit unmittelbar aus der Batterie entnommen. Im Autarkie- bzw. im Unterversorgungsfall UBAT<6V ermöglicht die Funktion 115 ein Umschalten des Versorgungsfalls auf VAS. Dies kann durch einen Transistorschalter erfolgen. Fig. 2 den Funktionsblock 205 bezüglich seines Aufbaus. Im Normalfall ist NA auf einem hohen Pegel und versorgt die Schnittstelle über die leitenden Transistoren T1, T11 aus VZP. A ist auf Nullpegel und T21 und T2 gesperrt. Im Autarkiefall ist A auf einem hohen Signalpegel und versorgt die Schnittstelle 206 über die leitenden Transistoren T21, T2 aus VAS. Durch die sogenannte Back-to-Back-Anordnung der N-MOSFETS T1, T11 bzw. T2, T21 ist VAS gegen VZP verpolgeschützt, ohne eine Diode einsetzen zu müssen. Andere Transistortypen sind alternativ einsetzbar.

Die linearen Spannungsregler im Baustein 100 im Funktionsblock 105 erzeugen aus der ersten Versorgungsspannung (VAS) die für ein Airbagsystem notwendigen stabilisierten digitalen und analogen Spannungen. Hier werden VST50=5V und VST33=3,3V beispielhaft erzeugt.

Die Blöcke 106 im ersten Halbleiterbaustcin und 116 im zweiten Halbleiterbaustein dienen zur Spannungsversorgung und zur Datenkommunikation mit den extern angeschlossenen Sensoren. Die Blöcke 107 im ersten Halbleiterbaustein und 117 im zweiten Halbleiterbaustein dienen zur Steuerung von Lampen und zur Messung, Versorgung und Auswertung analoger Sensoren, z.B. Schalter oder Hall-Sensoren. Die Blöcke 108 im ersten Baustein 100 und 118 im zweiten Baustein 111 dienen als Zündkreisendstufen zur Ansteuerung und Auswertung derselben. Der Block 109 im ersten Halbleiterbaustein 100 und 119 im zweiten Halbleiterbaustein 119 dienen als Kommunikationsbausteine (Interface) zur Kommunikation über Datenleitungen wie LIN, CAN oder SPI. In den Blöcken 110 bzw. 120 des ersten und zweiten Halbleiterbausteins ist jeweils einen Digitallogik vorgesehen, die zur Steuerung der gesamten Bausteinfunktionalität dient.

Figur 1 zeigt also den ersten und den zweiten Halbleiterbaustein zum Aufbau einer Airbagsteuergeräteelektronik. Der erste Halbleiterbaustein alleine enthält bis auf den Microcontroller und angeschlossene Sensorik alle Grundfunktionen, die für ein Airbagsteuergerät notwendig sind. Die Versorgungseinheit und thermische Eigenschaften des ersten - Halbleiterbausteins sind so ausgelegt, dass alle digitalen und analogen Funktionen dieses Bausteins des Basic-Microcontrollers, der steuergeräteinternen Sensorik angeschlossener Sensoren mit Stromschnittstelle, analoge Sensoren, angeschlossen Standardzündkreise sowie angeschlossene Kommunikationsschnittstellen versorgt werden können. Und zwar in einem definierten Spannungsbereich des Kraftfahrzeugs und einem definierten Temperaturbereich des ersten Halbleiterbausteins. Der definierte Spannungsbereich der Spannungsversorgung kann bspw. von 6 bis 20 Volt gehen. Der definierte Temperaturbereich des ersten, verpackten Halbleiterbausteins kann bspw. zwischen -40 und + 105 °C liegen. Neben dem einen zweiten Halbleiterbaustein können weitere Halbleiterbausteine vorgesehen sein, um weitere Aufgaben übernehmen zu können und dabei die Verlustleistung im Ladekreis der Energiereserve (Funktionsblock 101, 102) so zu reduzieren, dass die zur Versorgung der weiteren Aufgaben in den Bausteinen benötigte Energie durch den Baustein 100 zusätzlich bereitgestellt werden kann und dieser thermisch nicht überlastet wird. Die in beiden Halbleiterbausteinen vorhandene Precharger (Aufladeschaltkreise) sorgen dafür, dass das Vorladen der Energiereserve auf ca. Batteriespannungsniveau nunmehr im Tandem durch zwei oder n Stromregler möglich ist. Damit kann bei gleicher Ausführung des Aufladeschaltkreises in den Halbleiterbausteinen die Ladegeschwindigkeit der Energiereserve auf Batterieniveau bei gleicher Kapazität n-fach erhöht werden bzw. bei n-facher Kapazität wie für n-fache so große Systeme notwendig, gleichgehalten werden.

Die Pfeile 1b und 2b zeigen den Weg der Energie von der Batterie v_{bat}, v_{zp} über den Block 101, eine Spule und Schaltungsblöcken eines betakten Aufwärtswandlers zur Energiereserve eᵣ im ersten Halbleiterbaustein 100. Die Pfeile 1c und 2c zeigen den Weg der zusätzlichen Energie von der Batterie v_{bat}/v_{zp} über den Block 125 zur Spule an v_{pc}. Ist der Ladestrom des Prechargers 101 im Baustein 100 i_{pb} und der Ladestrom des Prechargers 125 im Companion-Baustein i_{pc}, so ist der gesamte Ladestrom der Energiereserve bzw. des Aufwärtswandlers iₚ = i_{pb} + i_{pc}. Im getakten Betrieb besitzt der Aufwärtskonverter 102 im ersten Halbleiterbaustein 100 einen definierten Aufwärtswandelwirkungsgrad. Dieser ist bei definierten Bedingungen der äußeren Beschaltung dem Laststrom iₑᵣ der Ein- und Ausgangsspannung der Taktfrequenz und der Temperatur fest. Durch Erweiterung mit dem zweiten Halbleiterbaustein 111 werden die Verluste, die im Ladeschaltkreis 101 des ersten Halbleiterbausteins 100 entstehen, aufgrund des endlichen Innenwiderstandes r_{ib} dieser Einrichtung im Aufwärtswandelbetrieb durch den parallelen Widerstand r_{ic} der Ladeschaltung im zweiten Halbleiterbausteins 111 deutlich reduziert. Da der Gesamtwiderstand der parallelen Ladeschaltkreise entsprechend rᵢ = r_{ib} *r_{ic}/ (r_{ib} + r_{ic}) sinkt.

Die Erhöhung des Wirkungsgrades des durch den zweiten Halbleiterbaustein 111 verbesserten Aufwärtskonverters des ersten Halbleiterbausteins 100 führt bei gleicher Belastung der Versorgungseinheit zu einer Reduzierung der Trägertemperatur des ersten Halbleiterbausteins 100 bzw. bei gleicher Temperatur zu einer Erhöhung der Versorgungsmöglichkeiten.

Diese erhöhten Versorgungsmöglichkeiten sind erwünscht, um das gewachsene System zu versorgen. Dies ist insbesondere der notwendige Versorgungsstrom für analoge und digitale Schaltungsblöcke im zweiten Halbleiterbaustein 111, sowie zur Erhöhung der Leistung des Microcontrollers in Bezug auf die Geschwindigkeit und den Speicher in größeren Systemen.

Ein wesentlicher Schaltungsblock der ersten Halbleiterbausteins 100 ist der Aufwärtskonverter 102. Dieser wird aus einem Precharger on Chip 101 oder weiteren Precharger in den Bausteinen 111... aus VZP (UBAT) gespeist und versorgt den als Verbraucher angekoppelten einzigen VER-VAS Abwärtswandler mit Enerige aus UBAT, die auf ein höheres Spannungsniveau 20...40V als VER gewandelt wird. Aus der abwärts gewandelten sogenannten analogen Versorgungsspannung VAS werden durch die Energieflusspfeile wie 5b, 6b, 7b, 7c angedeutet. Muss in einem größeren System die Anzahl der externen Sensoren gesteigert werden, so steigt die thermische Belastung im ersten Halbleiterbaustein 100 insbesondere durch höhere Verluste im Konverter 102. Um hier eine Lösung zu finden, die nicht einen weiteren Schaltwandler im zweiten Halbleiterbaustein notwendig macht, sieht die Erfindung einen neuen Ansatz vor, bei dem die Versorgung der zusätzlichen externen Sensoren über eine Schnittstelle im zweiten Halbleiterbaustein direkt aus der Fahrzeugsbatterie erfolgt und nur im Autarkiefall, d.h. bei nicht vorhandener oder zu kleiner Batteriespannung die Energie aus dem ersten Halbleiterbaustein vₐₛ zieht.

In der Figur 1 erkennt die Autarkieerkennung 112, dass v_{zp} zu niedrig ist. Um den spezifizierten Normalbetrieb aufrecht zu erhalten, bspw. ist v_{zp} < 5,2 Volt. In diesem Falle signalisiert der zweite Halbleiterbaustein dem ersten Halbleiterbaustein den Autarkiefall mit Hilfe des Signals Basis_CTL. Der Ladeschaltkreis 101 und der Aufwärtskonverter 102 des ersten Halbleiterbausteins 100 sowie der Ladekreis 125 des zweiten Halbleiterbausteins 111 werden gesperrt. Dadurch entfällt im ersten Halbleiterbaustein die Verlustleistung der gesamten Energiereserveladeeinrichtung. Diese ist nicht unerheblich, da für kleine Eingangsspannungen (v_{zb} = 5,2 Volt) der Wirkungsgrad der Energiereserveladeeinrichtung bei einer langen Ladephase im Vergleich zur Sperrphase den niedrigsten Wert annimmt. Bsp.: die Energiereserveladeeinrichtung mit einer Nutzleistung (vₑᵣ = 35 Volt, iₑᵣ = 75 mA) und einem Wirkungsgrad von bspw. 0,65 führt zu einer Verlustleistung von 1,4 Watt. Bei einem Wärmewiderstand von 32K/W des ersten Halbleiterbausteins ergibt sich eine Temperaturentlastung des ersten Halbleiterbausteins um 44,8 Kelvin.

Die unter Normalbedingungen für die externen Sensoren des zweiten Halbleiterbausteins laufende Versorgung aus v_{zp}, in der Figur gekennzeichnet durch 5c, wird nach der Autarkieerkennung 112 auf die Spannung vₐₛ des ersten Halbleiterbausteins, gekennzeichnet durch 6c, umgeschaltet.

Dadurch erhöht sich die Belastung der vₐₛ-Versorgung des ersten Halbleiterbausteins 100, der bereits im Normalbetrieb die Versorgung 5b, 6b, 7b und 7c sicherstellt. Dies ist nur thermisch möglich, da der erste Halbleiterbaustein 100 durch den Entfall der Verluste der Energiereserveladeeinrichtung thermisch entlastet wurde und damit höhere Verluste im Abwärtswandler möglich sind, ohne die maximale Temperatur des Trägermaterials zu überschreiten.

Die Figur 1 kann in einer weitem Ausführung durch weitere Halbleiterbausteine gemäß dem zweiten Halbleiterbaustein erweitert werden. Jeder solch ein Baustein mit Schnittstellen zur externen Sensoren muss über eine Autarkieerkennungsschaltung die Bestandteil des Bausteins sein kann oder nicht, die Versorgung der Schnittstellen von v_{zp}/v_{bat} auf eine geregelte Spannung vₐₛ, die der erste Halbleiterbaustein bereitstellt, umschaltbar sein.

Im Folgenden werden einige Beispiele gegeben. In einem ersten Beispiel ist die Batteriespannung v_{zp} größer als 5,2 Volt und als die aktuelle Spannung vₑᵣ. Das System befindet sich z.B. in der Hochlaufphase (VER=0, VZP=12V). Die Energiereserve wird durch die Precharger 101 im Halbleiterbaustein 100 und 125 im Halbleiterbaustein 111 parallel gcladen. Die externen Sensoren, die an die Schnittstellen 105, 107 des ersten Halbleiterbausteins 100 bzw. an den Schnittstellen 116, 117 des zweiten Halbleiterbausteins angeschlossen sind, werden nicht versorgt, die Schnittstellen sind gesperrt, damit die Energiereserve rasch auf ca. Batteriespannung gebracht wird. Daher sendet der zweite Halbleiterbaustein das Signal BASIS_CTL=1 an den ersten Halbleiterbaustein 100.

Im zweiten Betriebsbereich VZP≈VER, d.h. die Energiereserve ist vorgeladen und VZP>5,2V (UBAT>6V) sendet der Halbleiterbaustein 111 das Signal BASIS_CTL=1 an den ersten Halbleiterbaustein und signalisiert damit wieder, dass die Autarkieüberwachung im Baustein 111 eine ausreichende Batteriespannung sieht. Dadurch bleiben die beiden Precharger sowohl im Baustein 100 als auch im Baustein 111 aktiv. In diesem Betriebsbereich erkennt der Baustein 100 aber zusätzlich, dass die Energiereservespannung sich auf Batteriespannungsniveau befindet und aktiviert daher den Aufwärtswandler. Zusätzlich wird der Precharger 101 nur noch auf einem höheren Stromniveau begrenzt betrieben. Dieselbe Information wird auch dem Precharger im Baustein 111 durch das Signal CMP_CTL=0 übermittelt.

Die Energiereserve wird nun durch einen Wandler, dessen Wirkungsgrad aufgrund der Parallelschaltung der Precharger 101, 125-Innenwiderstände der in Sättigung befindlichen Transistoren verbessert ist, auf eine Spannung zwischen 20V...40V geladen, typischerweise auf 35V.

Das Steuergerät ist im Normalzustand. Die externen Sensoren PAS, PPS des Steuergeräts, die an den ersten Halbleiterbaustein angeschlossen sind, werden aus VAS versorgt. Diejenigen, die an den zweiten Halbleiterbaustein angeschlossen sind, werden aus VZP versorgt.

Im dritten Betriebsbereich ist der Autarkiefall oder der Unterversorgungsfall eingetreten, gekennzeichnet durch VZP<5,2V. Der zweite Halbleiterbaustein 111 übermittelt mit BASIS_CTL=0 dem ersten Baustein den Autarkiefall. Dieses Signal veranlaßt im Baustein 100 die Sperrung des Prechargers 101 und des Aufwärtswandlers 102. Im zweiten Baustein veranlaßt der Autarkiefall ebenfalls die Sperrung des Prechargers 125. Das Signal CMP_CTL ist hier ohne Bedeutung.

Die Funktionsgruppe 115 wird durch Erkennung des Autarkiefalles angeschaltet, d.h. die externen Sensoren PAS, PPS angeschlossen an den zweiten Halbleiterbaustein werden nun ebenso wie diejenigen am ersten Halbleiterbaustein aus VAS versorgt.

Wie oben angesprochen kann eine beliebige Anzahl von weiteren Halbleiterbausteinen vorgesehen sein, um den ersten und zweiten Halbleiterbaustein entsprechend zu entlasten.

## Patentansprüche

1. Steuergerät zur Ansteuerung von Personenschutzmitteln mit einem ersten Halbleiterbaustein (100), der zur Bereitstellung von verschiedenen Versorgungsspannungen (vₐₛ) und zur Aufladung einer Energiereserve (eᵣ) konfiguriert ist, **dadurch gekennzeichnet, dass** wenigstens ein zweiter Halbleiterbaustein (111), der ebenfalls zur Aufladung der Energiereserve (eᵣ) konfiguriert ist, vorgesehen ist, dass der erste und zweite Halbleiterbaustein (100,111) jeweils einen Halbleiterträger aufweisen, dass jeweilige Ladeschattungen des ersten und des wenigstens einen zweiten Halbleiterbausteins für die Aufladung parallel geschaltet sind.

2. Steuergerät nach Anspruch 1, **dadurch gekennzeichnet, dass** der erste und der zweite Halbleiterbaustein (100,111) zur Aufladung der Energie-reserve (eᵣ) auf das Spannungsniveau der Fahrzeugbatterie (v_{zp}) konfiguriert ist.

3. Steuergerät nach Anspruch 1, **dadurch gekennzeichnet, dass** der erste Halbleiterbaustein einen Spannungsäbwärtskonverter zur Bereitstellung einer ersten Versorgungsspannung für wenigstens einen ersten an das Steuergerät angeschlossenen Sensor (PASS, PPS) aufweist, und der zweite Halbleiterbaustein (11) die erste Versorgungsspannung aus dem Spannungsniveau (v_{zp}) der Fahrzeugbatterie ableitet und damit wenigstens einen zweiten an das Steuergerät angeschlossenen Sensor versorgt.

4. Steuergerät nach Anspruch 1, **dadurch gekennzeichnet, dass** der zweite Halbleiterbaustein (111) eine Schaltung zur Ausfallerkennung (112) der Fahrzeugbatterie aufweist.

5. Steuergerät nach Ansprüche, **dadurch gekennzeichnet, dass** der zweite Halbleiterbaustein (111) derart mit dem ersten Halbleiterbaustein (100) verbunden ist, dass bei einem Ausfall der Fahrzeugbatterie der erste Halbleiterbaustein (100) die Aufladung unterbricht und dafür den wenigstens einen zweiten Sensor mit der ersten Versorgungsspannung (vₐₛ) versorgt.

6. Steuergerät nach Anspruch 5, **dadurch gekennzeichnet, dass** der erste Halbleiterbaustein (100) zur Aufladung der Energiereserve (eᵣ) auf eine überhöhte Spannung (Vₑᵣ) konfiguriert ist und bei Ausfall der Fahrzeugbatterie einen Spannungsaufwärtskonverter zur Erzeugung der überhöhten Spannung (vₑᵣ) sperrt:

7. Steuergerät nach einem der vorherigen Ansprüche, **dadurch gekennzeichnet, dass** der erste und der zweite Halbleiterbaustein (100,111) jeweils einen Schaltkreis zur Anbindung der Sensoren zur Steuerung von Schaltern, zur Steuerung von Zündkreisen und zur Kommunikation mit Datenleitungen aufweisen.

## Claims

1. Control device for actuating person-protecting means having a first semiconductor module (100) which is configured to make available various supply voltages (vₐₛ) and to charge a power reserve (eᵣ), **characterized in that** at least one second semiconductor module (111), which is also configured to charge the power reserve (eᵣ), is provided, **in that** the first and second semiconductor modules (100, 111) each have a semiconductor carrier, **in that** respective charging circuits of the first and of the at least one second semiconductor module are connected in parallel for the charging.

2. Control device according to Claim 1, **characterized in that** the first and second semiconductor modules (100, 111) are configured to charge the power reserve (eᵣ) to the voltage level of the vehicle battery (v_{zp}).

3. Control device according to Claim 1, **characterized in that** the first semiconductor module has a voltage downconverter for making available a first supply voltage for at least a first sensor (PASS, PPS) which is connected to the control device, and the second semiconductor module (111) derives the first supply voltage from the voltage level (v_{zp}) of the vehicle battery and therefore supplies at least a second sensor which is connected to the control device.

4. Control device according to Claim 1, **characterized in that** the second semiconductor module (111) has a circuit (112) for detecting failure of the vehicle battery.

5. Control device according to Claim 4, **characterized in that** the second semiconductor module (111) is connected to the first semiconductor module (100) in such a way that, when the vehicle battery fails, the first semiconductor module (100) interrupts the charging and instead supplies the at least one second sensor with the first supply voltage (vₐₛ).

6. Control device according to Claim 5, **characterized in that** the first semiconductor module (100) is configured to charge the power reserve (eᵣ) to an increased voltage (vₑᵣ), and when the vehicle battery fails said semiconductor module (100) disables a voltage upconverter in order to generate the increased voltage (vₑᵣ).

7. Control device according to one of the preceding claims, **characterized in that** the first and second semiconductor modules (100, 111) each have a circuit for connecting the sensors for controlling switches, for controlling ignition circuits and for communicating with data lines.

## Revendications

1. Appareil de commande de moyens de protection de personnes comportant un premier composant semi-conducteur (100) pour fournir différentes tensions d'alimentation (vₐₛ) et pour charger une réserve d'énergie (eᵣ),
**caractérisé par** au moins un second composant semi-conducteur (111) également configuré pour charger la réserve d'énergie (er), et le premier et le second composant semi-conducteur (100, 111) comportent chacun un support de semi-conducteur,
les circuits de charge respectifs du premier et du second composant semi-conducteur étant branchés en parallèle pour assurer la charge.

2. Appareil de commande selon la revendication 1,
**caractérisé en ce que**
le premier et le second composant semi-conducteur (100, 111) sont configurés pour charger la réserve d'énergie (eᵣ), au niveau de tension de la batterie du véhicule (v_{zp}).

3. Appareil de commande selon la revendication 1,
**caractérisé en ce que**
le premier composant semi-conducteur comporte un convertisseur abaisseur de tension pour fournir une première tension d'alimentation pour au moins un premier capteur (PASS, PPS) relié à l'appareil de commande et le second composant semi-conducteur (111) fournit la première tension d'alimentation à partir du niveau de tension (v_{zp}). de la batterie du véhicule et alimente ainsi au moins un second capteur relié à l'appareil de commande.

4. Appareil de commande selon la revendication 1,
**caractérisé en ce que**
le second composant semi-conducteur (111) comporte un circuit de détection de chocs (112) de la batterie du véhicule.

5. Appareil de commande selon la revendication 4,
**caractérisé en ce que**
le second composant semi-conducteur (111) est relié au premier composant semi-conducteur (100) pour qu'en cas de défaillance de la batterie du véhicule, le premier composant semi-conducteur (100) coupe la charge et en revanche alimente au moins un second capteur avec la première tension d'alimentation (vas).

6. Appareil de commande selon la revendication 5,
**caractérisé en ce que**
le premier composant semi-conducteur (100) est configuré pour charger la réserve d'énergie (eᵣ), à une tension relevée (vₑᵣ), et qu'en cas de défaillance de la batterie du véhicule, il bloque un convertisseur releveur de tension pour générer la tension relevée (Vₑᵣ).

7. Appareil de commande selon l'une des revendications précédentes,
**caractérisé en ce que**
le premier et le second composant semi-conducteur (100, 111) comportent chacun un circuit de commutation pour relier les capteurs de commande de commutateur, de commande de circuit d'allumage, et pour la communication avec les lignes de transmission de données.
